# EUROPÄISCHE PATENTSCHRIFT

(11) **EP 0 759 132 B1**
(45) Veröffentlichungstag und Bekanntmachung des Hinweises auf die Patenterteilung: **05.08.1998**
(21) Anmeldenummer: 95920019.7
(22) Anmeldetag: 11.05.1995
(51) Int. Cl.: F16K 17/04

(54) **DRUCKHALTEVENTIL**
PRESSURE RETAINING VALVE
SOUPAPE DE MAINTIEN EN PRESSION

(30) Priorität: 13.05.1994 DE 9407952 U
(43) Veröffentlichungstag der Anmeldung: 26.02.1997
(73) Patentinhaber: ASV Stübbe GmbH & Co. KG, D-32602 Vlotho (DE)
(72) Erfinder: KOHLSTÄDT, Egon, D-32602 Vlotho (DE)
(74) Vertreter: Hosbach, Hans Ulrich, Dipl.-Ing.
(86) Internationale Anmeldenummer: EP9501777
(87) Internationale Veröffentlichungsnummer: WO9531658

(56) Entgegenhaltungen:
- DE-A- 2 022 334
- DE-A- 3 912 969
- DE-B- 1 173 301
- FR-A- 2 163 837
- FR-A- 2 225 673
- FR-A- 2 264 462
- NL-A- 6 700 667

## Beschreibung

Die Erfindung betrifft ein Druckhalteventil mit
einem Gehäuse, das einen Gehäuseeintrittskanal und einen mit dem Gehäuseeintrittskanal verbindbaren Gehäuseaustrittskanal aufweist,
einem im Gehäuse verschiebbaren Ventilkolben, der einen Ventilschaft aufweist,
einem dem Ventilkolben zugeordneten Ventilsitz,
wobei der Ventilkolben von einer Feder in Richtung auf den Ventilsitz verspannt ist und in Schließstellung die Verbindung zwischen Gehäuseeintrittskanal und Gehäuseaustrittskanal verschließt, und einer im Gehäuse eingespannten, die Feder und den Ventilkolben trennenden Trennmembran.

Ein solches Ventil ist bekannt aus Dokument FR-A-2 163 837.

Bei Druckhalteventilen der vorgenannten Art spricht man von einer den Ventilkolben öffnenden Anströmung unter dem Ventilsitz. Bei einer anderen bekannten Bauart führt der Gehäuseeintrittskanal in den Gehäuseinnenraum zwischen der Trennmembrane und der ihr zugewendeten Ventilsitzoberseite, wobei sich der Austrittskanal an die Ventilsitzunterseite anschließt; bei dieser Bauart spricht man von einer den Ventilkolben öffnenden Anströmung unter der Membrane. Bei der Anströmung unter der Membrane treten zwar nicht wie bei den Druckhalteventilen der eingangs genannten Art sogenannte Regelschwingungen auf, die Anströmung unter der Membrane hat aber den großen Nachteil, daß die gesamte Membranfläche zwangsläufig mit dem gesamten vorkommenden Systemdruck beaufschlagt wird, so daß von der das Druckhalteventil schließenden Ventilfeder enorme Federkräfte aufgebracht werden müssen und bei einem Druckabfall im System auf Null enorme Kräfte auf dem Ventilsitz bzw. der Ventilsitzdichtung lasten und die Trennmembrane ein Sicherheitsrisiko darstellt und deshalb mit hohem Fertigungsaufwand und starken Gewebeverstärkungen hergestellt werden muß.

Bei den unter dem Ventilsitz angeströmten Druckhalteventilen der eingangs genannten Art treten die hohen Kräfte nicht auf; die Trennmembrane braucht nur den Federdom mit seinen Einzelteilen vor aggressiven Medien zu schützen. Nachteilig ist bei den Druckhalteventilen der eingangs genannten Art aber das Auftreten von Regelschwingungen. Um das Ventil dicht zu halten, wird die Federkraft so eingestellt, daß sie die von dem Medium auf den geschlossenen Ventilkolben ausgeübte Kraft, die sich aus dem Produkt aus Druck des Mediums und lichter Fläche des Gehäuseventilsitzes ergibt, gerade überwindet. Bei einem Druckanstieg unter dem Ventilkolben, der das Ventil zum Öffnen zwingt, wird durch den inneren Widerstand des Druckhalteventils bis zur Auslaufseite des Ventils ein Druck entstehen, der zwar gering sein kann, der aber beim Öffnen des Ventilkolbens durch einen konstruktiv und herstellungstechnisch bedingt vom Gehäuseaustrittskanal bis zur Trennmembrane hochreichenden Gehäuseinnenraum unter der Membranfläche wirksam wird. Dadurch hebt sich der Ventilkolben entsprechend. Da aber die Federkraft für die kleinere lichte Fläche des Gehäuseventilsitzes eingestellt bzw. bemessen ist, ist ein Gleichgewichtszustand zwischen der eingestellten Federkraft und der erzeugten Membrankraft nicht hergestellt, so daß der Ventilkolben wieder in Richtung auf den Gehäuseventilsitz gedrückt wird. Dieses Auf und Ab des Ventilkolbens vollzieht sich in schnellen Intervallen; das Druckhalteventil rappelt und verursacht unerwünschte Regelschwingungen.

Es sind unter dem Ventilsitz angeströmte Druckhalteventile bekannt, bei denen komplizierte spezielle Ventilkolbenausbildungen und Ventilkolbenführungen mit selbsttätig sich schließenden und öffnenden Bypaß-Kanälen angewendet werden, um das Problem der Regelschwingungen zu beheben. Der konstruktive und sachliche Aufwand dafür ist aber hoch und kostspielig.

Die Erfindung hat daher zur Aufgabe, ein Druckhalteventil der eingangs genannten Art mit einfachen und kostengünstigen Mitteln so auszubilden, daß keine Regelschwingungen auftreten.

Diese Aufgabe löst die Erfindung in erster Linie dadurch,
daß zwischen der Trennmembrane und dem Ventilsitz eine den Ventilschaft verschiebbar führende Führungsscheibe angeordnet ist, und
daß die Führungsscheibe den Ventilschaft unter Bildung eines engen, als Drosselstelle wirkenden Ringspaltes umgibt.

Über den konstruktiv bedingten Ringspalt besteht eine Verbindung zwischen der Oberseite des Gehäuseventilsitzes und der Unterseite der Trennmembrane. Beim Öffnen des Ventilkolbens kann auf diese Weise Medium durch den Ringspalt unter die Trennmembrane gelangen. Wenn aber der Gleichgewichtszustand zwischen Federkraft und Membrankraft nicht erreicht wird und sich der Ventilkolben in Richtung auf den Gehäuseventilsitz bewegen will, muß auch Medium durch den engen Ringspalt zurückgepreßt werden. Der Ringspalt bewirkt dadurch eine wirksame hydraulische Dämpfung, so daß das Druckhalteventil, wie praktische Erprobungen gezeigt haben, überraschen gut schwingungsfrei arbeitet.

Es wurde gefunden, daß ein für die Praxis sehr befriedigendes schwingungsfreies Regelverhalten für die meisten in der Praxis bei Druckhalteventilen vorkommenden Medien erreichbar ist, wenn der Ventilschaft im Durchmesser nicht wesentlich größer als der Ventilsitz ist und der Ringspalt zwischen dem Ventilschaft und der Führungsscheibe eine lichte radiale Weite hat, die maximal 0,25 mm beträgt. Drosselwirkung und Reibungsfreiheit sind auf diese Weise optimiert

Eine erfindungsgemäße vorteilhafte Weiterbildung des Druckhalteventils besteht darin, daß der Ventilkolben an seinem dem Ventilsitz zugewendeten Ende einen Kolbenbund aufweist, der mit einer scheibenförmigen Ausnehmung versehen ist, daß die Ausnehmung einen U-förmigen Begrenzungsrand aufweist, und daß eine Dichtungsplatte mit einem geringen Spiel lose in der Ausnehmung eingesetzt ist. Durch das Spiel wird die Gefahr vermieden, daß sich hinter der Dichtungsscheibe ein Druck aufbauen kann, der bei einem Druckabfall im Druckhalteventil vor der Dichtungsplatte diese aus der Ausnehmung herausdrücken könnte. Die Dichtungsplatte ist dadurch ausspülsicher am Ventilkolben gelagert.

Eine bevorzugte Weiterbildung der Erfindung ist dadurch gekennzeichnet, daß die Wirkfläche der Trennmembrane im wesentlichen gleich groß ist wie die Fläche des Ventilsitzes. Vorzugsweise sollten sich die Flächen höchstens um acht Prozent voneinander unterscheiden. Diese Weiterbildung hat den wesentlichen Vorteil, daß das Druckhalteventil gegendrucksicher ist. Wenn ein Gegendruck im Gehäuseaustrittskanal auftritt, greift an der Membrane eine entgegen der Federkraft gerichtete erste Kraft an, deren Betrag gleich dem Produkt aus Wirkfläche der Trennmembrane und Gegendruck ist. Außerdem übt der Gegendruck auf die der Trennmembrane zugewendete Oberfläche des Ventilkolbens von der Größe des Ventilsitzes eine zweite Kraft aus, deren Betrag aufgrund der gleichen Größe von Wirkfläche der Trennmembrane und Fläche des Ventilsitzes gleich der ersten Kraft und dieser entgegengerichtet ist. Diese beiden Kräfte heben sich gegeneinander auf, so daß auch bei Gegendruck keine zusätzliche Kraft auf die Feder ausgeübt wird, wie es der Fall wäre, wenn die Wirkfläche der Membran größer als die Fläche des Ventilsitzes wäre. Auf diese Weise kann der Vordruck im Druckhalteventil unabhängig vom anliegenden Gegendruck konstant gehalten werden. Weitere vorteilhafte Ausführungsformen sind in den Unteransprüchen gekennzeichnet.

Im folgenden wird die Erfindung anhand zweier in der Zeichnung dargestellter Ausführungsbeispiele näher erläutert. In der Zeichnung zeigen:
- Fig. 1: in schematischer Darstellung einen Axialschnitt durch ein erstes Ausführungsbeispiel des erfindungsgemäßen Druckhalteventils und
- Fig. 2: in gleicher Darstellung ein zweites Ausführungsbeispiel des erfindungsgemäßen Druckhalteventils.

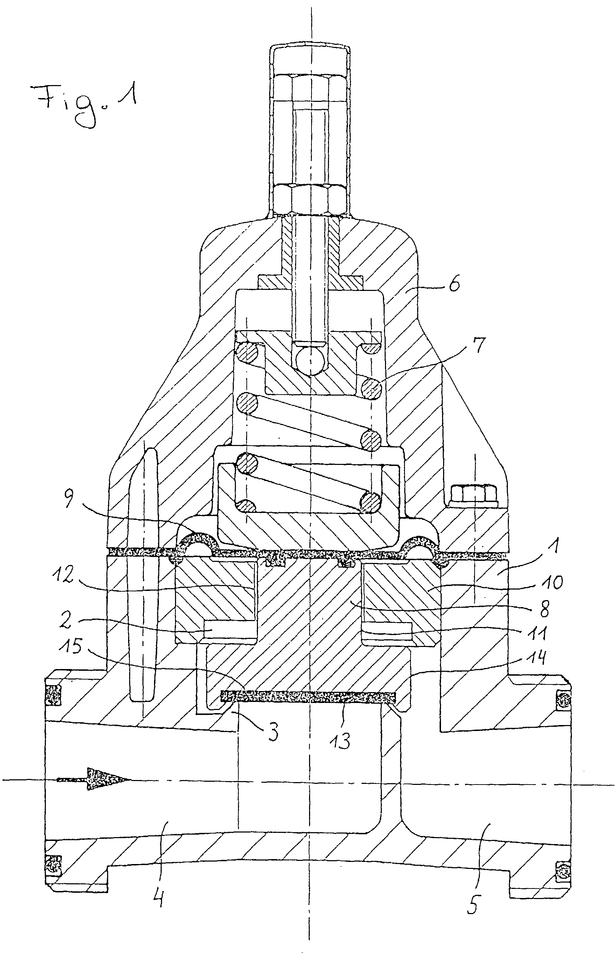

Nach Fig. 1 enthält ein Ventilgehäuse 1 einen Ventilgehäuseraum 2 mit einem Gehäuseventilsitz 3. Zur Unterseite des Ventilsitzes 3 führt ein Gehäuseeintrittskanal 4. An die Oberseite des Ventilsitzes 3 schließt sich ein Gehäuseaustrittskanal 5 an. Das Druckhalteventil besitzt weiterhin einen Federdom 6 mit einer Druckfeder 7, die mit ihrer einstellbaren Federkraft einen Ventilkolben 8 gegen den Ventilsitz 3 andrückt. Zwischen dem Gehäuse 1 und dem Federdom 6 ist eine Trennmembrane 9 dicht eingespannt, die den Ventilgehäuseraum 2 und den Ventilkolben 8 vom Federdom 6 und der Druckfeder 7 trennt.

Im Ventilgehäuseraum 2 ist oberhalb des Ventilsitzes 3 eine Führungsscheibe 10 angeordnet, die den Ventilkolben 8 verschiebbar führt und dessen zylindrischen Ventilschaft 11 derart umschließt, daß sie mit dem Führungsschaft einen über den gesamten Schaftumfang verlaufenden engen Ringspalt 12 bildet. Bis auf diesen engen Ringspalt 12 deckt die Führungsscheibe 10 die Unterseite der Trennmembrane 9 dicht gegenüber der mit dem Gehäuseaustrittskanal 5 verbundenen Oberseite des Ventilsitzes 3 ab, so daß nur durch das enge hydraulische Spiel des Ringspaltes 12 Medium zur Unterseite der Trennmembrane 9 gelangen kann. Die radiale Weite des Ringspaltes 12 ist so gering, daß der Ringspalt 12 von dem Medium, in Abhängigkeit von dessen Viskosität, nur mit einer durch Drosselung wirksam gedämpften und stark verlangsamten Strömung durchflossen werden kann. Allein durch diese einfache konstruktive Maßnahme wird das angestrebte schwingungsfreie, nicht mehr rappelnde Regelverhalten des Druckhalteventils erreicht. Dieses Ziel kann in den meisten in der Praxis vorkommenden Fällen, in denen Druckhalteventile eingesetzt werden, erreicht werden, wenn die lichte radiale Weite des Ringspaltes 12 zwischen dem Ventilschaft 11 und der Führungsscheibe 10 höchstens 0,25 mm beträgt, gleichgültig welche Größe der Ventilkolben in Abhängigkeit von der Nennweite des Druckhalteventils hat.

Der Ventilschaft 11 hat einen Durchmesser, der im wesentlichen dem Durchmesser der Ventilsitzöffnung 3 entspricht. Der Ventilschaft 11 weist an seinem dem Ventilsitz 3 zugewendeten Ende einen Kolbenbund 14 auf, der im Durchmesser größer ist als die Ventilsitzöffnung 3. Der Kolbenbund 14 enthält eine scheibenförmige Ausnehmung 15, in die eine die Ventilsitzöffnung 3 überdeckende Dichtungsplatte 13 lose eingesetzt ist. Der Begrenzungsrand der Ausnehmung 15 ist etwa U-förmig ausgebildet und umfaßt den Umfangsrand der Dichtungsplatte 13 nicht spielfrei und dicht; sondern mit einem kleinen Beweglichkeitsspiel. Aufgrund dieses Spiels kann hinter die Dichtungsplatte gelangtes Medium ungehindert wieder zur Vorderseite der Dichtungsplatte entweichen. Hierdurch wird eine ausspülsichere Lagerung der Dichtungsplatte 13 in der scheibenförmigen Ausnehmung 15 erreicht.

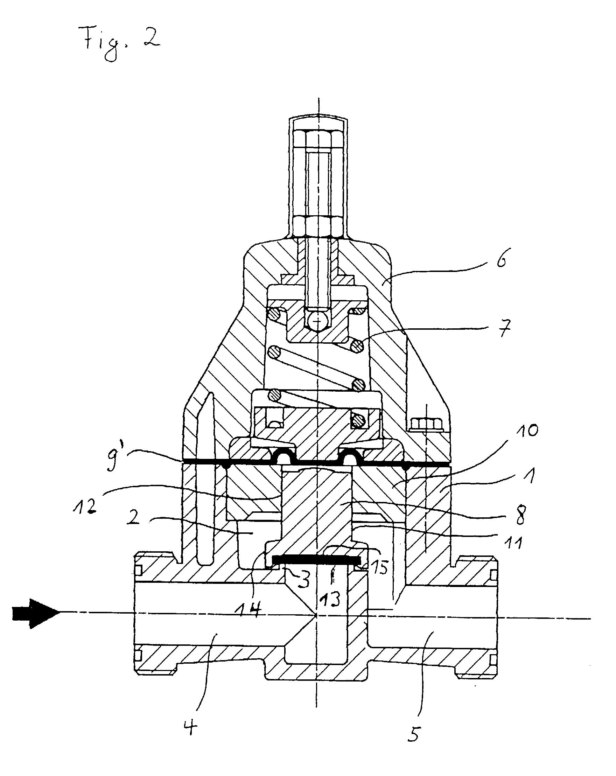

Das Druckhalteventil gemäß Fig. 2 unterscheidet sich von dem Druckhalteventil gemäß Fig. 1 nur dadurch, daß die Trennmembrane 9' eine kleinere Wirkfläche als die Trennmembrane 9 in Fig. 1 hat. Die Trennmembrane 9' ist so eingespannt, daß ihre Wirkfläche gleich groß ist wie die Fläche des Ventilsitzes 3. Auf diese Weise beeinträchtigt ein gegebenenfalls anstehender Gegendruck im Gehäuseaustrittskanal 5 die Funktion des Druckhalteventils nicht. Die vom Gegendruck auf die Trennmembrane ausgeübte Kraft, deren Betrag gleich dem Produkt aus Wirkfläche der Trennmembran und Gegendruck ist, ist somit gleich der entgegengesetzt gerichteten, auf den Ventilkolben ausgeübten Kraft. Das Ventil ist bei dieser Ausführungsform gegendrucksicher und arbeitet somit mit einer hohen Genauigkeit.

Im Rahmen des Erfindungsgedankens sind zahlreiche Variationen denkbar. Der Ventilschaft und der zugehörige Ringspalt können z.B. je nach Größe des Ventils einen beliebigen Durchmesser aufweisen.

## Patentansprüche

1. Druckhalteventil mit
einem Gehäuse (1), das einen Gehäuseeintrittskanal (4) und einen mit dem Gehäuseeintrittskanal verbindbaren Gehäuseaustrittskanal (5) aufweist,
einem im Gehäuse (1) verschiebbaren Ventilkolben (8), der einen Ventilschaft (11) aufweist,
einem dem Ventilkolben (8) zugeordneten Ventilsitz (3),
wobei der Ventilkolben (8) von einer Feder (7) in Richtung auf den Ventilsitz (3) verspannt ist und in Schließstellung die Verbindung zwischen Gehäuseeintrittskanal (4) und Gehäuseaustrittskanal (5) verschließt, und
einer im Gehäuse (1) eingespannten, die Feder (7) und den Ventilkolben (8) trennenden Trennmembran (9, 9'),
**dadurch gekennzeichnet**,
daß zwischen der Trennmembran (9, 9') und dem Ventilsitz (3) eine den Ventilschaft (11) verschiebbar führende Führungsscheibe (10) angeordnet ist, und
daß die Führungsscheibe (10) den Ventilschaft (11) unter Bildung eines engen, als Drosselstelle wirkenden Ringspaltes (12) umgibt.

2. Druckhalteventil nach Anspruch 1, dadurch gekennzeichnet,
daß der Ventilschaft (11) im Durchmesser, nicht wesentlich größer als der Ventilsitz (3) ist und
daß die Breite des Ringspaltes (12) zwischen Ventilschaft (11) und Führungsscheibe (10) maximal 0,25 mm beträgt.

3. Druckhalteventil nach Anspruch 1 oder 2, dadurch gekennzeichnet,
daß der Ventilkolben (8) an seinem dem Ventilsitz (3) zugewendeten Ende einen Kolbenbund (14) aufweist, der mit einer scheibenförmigen Ausnehmung (15) versehen ist,
daß die Ausnehmung (15) einen U-förmigen Begrenzungsrand aufweist, und
daß eine Dichtungsplatte (13) mit einem geringen Spiel lose in der Ausnehmung (15) eingesetzt ist.

4. Druckhalteventil nach einem der Ansprüche 1 bis 3, dadurch gekennzeichnet,
daß das Gehäuse (1) zweiteilig ausgebildet ist,
daß der der Feder (7) zugeordnete Gehäuseteil (6) als Federdom ausgebildet ist, und
daß die Trennmembran (9, 9') zwischen den beiden Gehäuseteilen eingespannt ist.

5. Druckhalteventil nach einem der Ansprüche 1 bis 4, dadurch gekennzeichnet, daß die Wirkfläche der Trennmembran (9') im wesentlichen gleich groß ist wie die Fläche des Ventilsitzes (3).

## Claims

1. A pressure retaining valve including a housing (1), which has a housing inlet passage (4) and a housing outlet passage (5), which may be connected to the housing inlet passage, a valve piston (8), which is movable in the housing (1) and has a valve shaft (11), a valve seat (3) associated with the valve piston (8), the valve piston (8) being urged by a spring (7) in the direction towards the valve seat (3) and, in the closed position, sealing the connection between the housing inlet passage (4) and the housing outlet passage (5), and an isolating membrane (9, 9'), which is clamped in the housing (1) and separates the spring (7) and the valve piston (8), characterised in that arranged between the isolating membrane (9, 9') and the valve seat (3) there is a guide disc (10), which movably guides the valve shaft (11), and that the guide disc (10) surrounds the valve shaft (11) whilst defining a narrow annular gap (12) acting as a throttle.

2. A pressure retaining valve as claimed in Claim 1, characterised in that the diameter of the valve shaft (11) is not substantially larger than that of the valve seat (3) and that the breadth of the annular gap (12) between the valve shaft (11) and guide disc (10) is at most 0.25 mm.

3. A pressure retaining valve as claimed in Claim 1 or 2, characterised in that at its end directed towards the valve seat (3) the valve piston (S) has a piston collar (14) which is provided with a disc-shaped recess (15), that the recess (15) has a U-shaped boundary, edge and that a sealing plate (13) is loosely inserted in the recess (15) with a small clearance.

4. A pressure retaining valve as claimed in one of Claims 1 to 3, characterised in that the housing (1) is of two-part construction, that the housing portion (6) associated with the spring (7) is constructed as a spring dome and that the isolating membrane (9, 9') is clamped between the two housing portions.

5. A pressure retaining valve as claimed in one of Claims 1 to 4, characterised in that the effective area of the isolating membrane (9') is substantially of the same size as the area of the valve seat (3).

## Revendications

1. Soupape de tenue de pression comportant
un corps (1) qui présente un canal d'entrée (4) et un canal de sortie (5) pouvant être mis en communication avec le canal d'entrée,
un piston (8) mobile dans le corps (1) et présentant une tige (11),
un siège (3) affecté au piston (8),
le piston (8) étant rappelé en direction du siège (3) par un ressort (7) et, en position fermée, coupant la communication entre le canal d'entrée (4) et le canal de sortie (5), et
une membrane séparatrice (9, 9') montée dans le corps (1) qui sépare le ressort (7) du piston (8),
caractérisée par le fait
qu'entre la membrane séparatrice (9, 9') et le siège (3) est placé un disque de guidage (10) qui guide mobile la tige (11), et
que le disque de guidage (10) entoure la tige (11) avec formation d'un interstice annulaire étroit (12) jouant le rôle d'endroit d'étranglement.

2. Soupape de tenue de pression selon la revendication 1, caractérisée par le fait
que le diamètre de la tige (11) n'est pas beaucoup plus grand que celui du siège (3) et
que la largeur de l'interstice annulaire (12) entre la tige (11) et le disque de guidage (10) est d'au plus 0,25 mm.

3. Soupape de tenue de pression selon l'une des revendications 1 et 2, caractérisée par le fait
que le piston (8) présente, à son extrémité dirigée vers le siège (3), un collet (14) qui est pourvu d'un évidement en forme de disque (15),
que cet évidement (15) présente un bord de limitation en forme de U, et
qu'une plaque d'étanchéité (13) est montée libre avec un faible jeu dans l'évidement (15).

4. Soupape de tenue de pression selon l'une des revendications 1 à 3, caractérisée par le fait
que le corps (1) est en deux parties,
que la partie (6) du corps associée au ressort (7) est en forme de dôme, et
que la membrane séparatrice (9, 9') est montée entre les deux parties du corps.

5. Soupape de tenue de pression selon l'une des revendications 1 à 4, caractérisée par le fait que la surface active de la membrane séparatrice (9') est sensiblement égale à la surface du siège (3).
